Europäisches Patentamt

European Patent Office

Office européen des brevets

(11) Numéro de publication: **0 348 270**
**A1**

(12) **DEMANDE DE BREVET EUROPEEN**

(21) Numéro de dépôt: **89401634.4**

(22) Date de dépôt: **13.06.89**

(51) Int. Cl.⁴: **G 05 D 16/20**
**F 16 D 25/14, B 60 T 13/16**

(30) Priorité: **21.06.88 FR 8808288**

(43) Date de publication de la demande:
**27.12.89 Bulletin 89/52**

(84) Etats contractants désignés: **DE ES GB IT**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Louviot, Jean-François**
**11, Sente du Nord**
**F-92310 Sèvres (FR)**

**Merletti, Didier**
**1, Avenue Jean Lurcat**
**F-78340 Les Clayes Sous Bois (FR)**

(74) Mandataire: **Ernst-Schonberg, Michel et al**
**REGIE NATIONALE DES USINES RENAULT (S. 0804)**
**F-92109 Boulogne Billancourt Cedex (FR)**

(54) **Circuit de commande, de régulation et de contrôle d'un débit de fluide.**

(57) Circuit de commande, de régulation et de contrôle d'un débit de fluide comportant :

- un distributeur (12) associé à un récepteur (15) actionné par un fluide sous pression,
- un conduit (16) d'alimentation en fluide sous pression sur lequel est branché le récepteur (15),
- une électro-pompe (11, 10) sur laquelle est branché le distributeur (12),
- un dispositif (19) actionné par un capteur (18) de mesure connecté au conduit d'alimentation du récepteur (15) agencé de façon à contrôler le moteur électrique (11) en comparaison avec la valeur de consigne d'un moyen d'actionnement (20) du récepteur,

caractérisé par le fait en ce qu'il est prévu un clapet (14) différentiel à ressort et moyen limiteur de chute de pression piloté par la pression de fluide, ce clapet limiteur agissant de manière à réduire la pression d'alimentation du récepteur par suite d'une réduction du débit de la pompe.

FIG.1

EP 0 348 270 A1

**Description**

## CIRCUIT DE COMMANDE, DE REGULATION ET DE CONTROLE D'UN DEBIT DE FLUIDE

L'invention concerne un circuit de commande, de régulation et de contrôle d'un débit de fluide qui assure la commande de récepteurs hydrauliques à simple effet tels que des vérins ou cylindres de frein ou d'embrayage.

L'invention concerne plus particulièrement un circuit de commande d'une électro-pompe constituée par un moteur électrique à vitesse variable qui entraîne une pompe hydraulique.

On sait que le débit de la pompe est consécutif à la rotation du moteur d'entraînement et que sa pression de sortie est sensiblement proportionnelle au couple du moteur. Par voie de conséquence, s'il est souhaité de maintenir la pression d'alimentation du récepteur, on obtient un échauffement non souhaité du moteur électrique.

Lorsque le débit de la pompe est inversé, la pression de sortie génère un couple résistant sur l'entraînement de la pompe et se traduit également par un échauffement du moteur.

Au cours d'un cycle de commande d'un récepteur à simple effet qui nécessite une inversion et un arrêt du débit de la pompe, en correspondance avec une montée en pression, au maintien de la pression puis à une diminution de la pression de commande du récepteur, il est souhaité de limiter la consommation d'énergie à la phase de fonctionnement relative à la montée en pression du récepteur.

Par ailleurs, l'arrêt de la pompe sous pression est préjudiciable au bon fonctionnement de son graissage et l'inversion de son sens de rotation nécessite la mise en oeuvre de technologies de construction de la pompe et de conception de circuits de commande du moteur d'entraînement complexes.

Un premier objet de l'invention est un circuit de commande d'une électro-pompe hydraulique dans le but d'autoriser l'arrêt de la pompe sous couple avec une dépense réduite d'énergie.

Un autre objet de l'invention est un circuit de commande d'une électro-pompe dans lequel la pompe alimente un récepteur au travers d'un bloc hydraulique de régulation et de contrôle tandis que le moteur électrique est alimenté par un courant variable en fonction du signal délivré par un capteur de pression de la pompe.

L'invention a également pour objet un circuit de commande, de régulation et de contrôle d'un débit de fluide comportant :
- un distributeur associé à un récepteur actionné par le fluide sous pression,
- un conduit d'alimentation en fluide sous pression sur lequel est branché ledit récepteur,
- une électro-pompe sur laquelle est branché le distributeur,
- un dispositif de contrôle du moteur actionné par un capteur de mesure connecté au conduit d'alimentation du récepteur agencé à contrôler le moteur en comparaison avec la valeur de consigne d'un moyen d'actionnement du récepteur.

Selon l'invention, il est prévu un clapet différentiel à ressort et moyen limiteur de chute de pression piloté par la pression de fluide, ce clapet -limiteur agissant de manière à réduire la pression d'alimentation du récepteur par suite d'une réduction du débit de la pompe.

Le circuit de commande ainsi réalisé autorise l'emploi d'une électro-pompe à un seul sens de rotation dont la pression assure la commande et le maintien sous pression du récepteur avec un couple d'entraînement plus réduit dans le but de limiter les pertes par échauffement du moteur.

D'autres caractéristiques et avantages de l'invention ressortiront de la description d'un exemple de réalisation du circuit faite en référence au dessin annexé dans lequel :
- La figure 1 est une représentation schématique du circuit,
- La figure 2 est une vue en coupe du bloc hydraulique incorporant notamment le clapet différentiel et le moyen limiteur de pression.

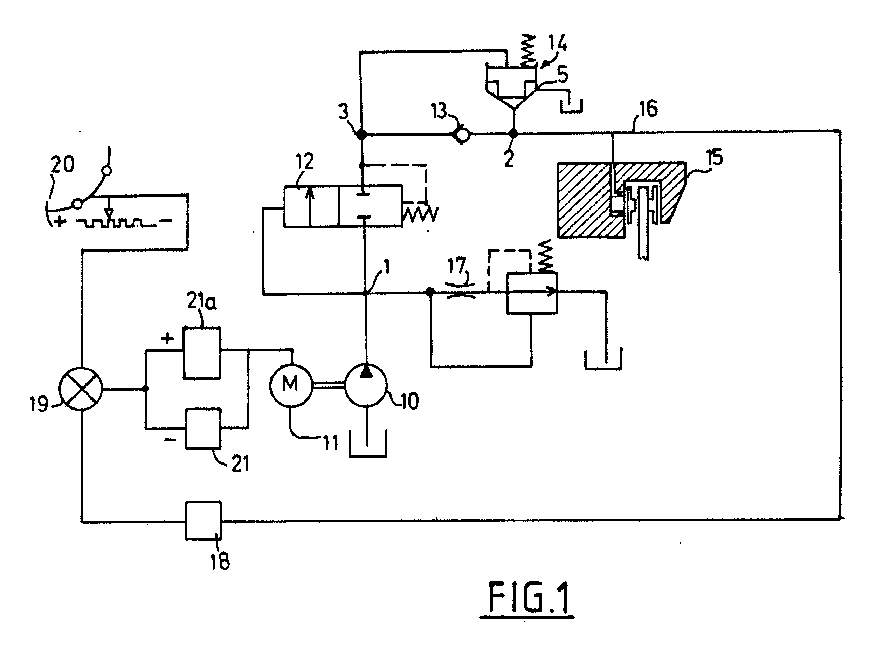

Sur la figure 1, le circuit de commande est constitué par une pompe volumètrique 10 à cylindrée fixe entraînée par un moteur électrique 11. L'électro-pompe 10, 11 débite dans un distributeur 12 à deux voies à commande par pression et rappel par ressort. Sur la voie de sortie du distributeur est branché un ensemble de clapets en parallèle respectivement constitués par un clapet anti-retour 13 et par un clapet différentiel 14 à ressorts soumis à une pression de pilotage fournie par la pompe 10.

L'orifice de sortie du clapet 13 alimente en fluide sous pression un récepteur 15 qui peut être, par exemple, un frein ou un embrayage par l'intermédiaire d'un conduit d'alimentation 16. Par contre, le clapet 14 assure la décompression du récepteur comme il sera expliqué ci-après :

Un moyen limiteur de débit 17 est branché sur l'orifice de sortie de la pompe 10. Un capteur 18 mesure un paramètre (pression, force, décélération...) de fonctionnement du récepteur et délivre un signal de tension à un comparateur 19 alimenté par un signal de consigne délivré par un moyen d'actionnement 20.

Les signaux de mesure et de consigne sont comparés à une valeur de seuil au-dessus delaquelle le comparateur 19 délivre un signal à l'un ou l'autre de deux amplificateurs 21, 21a dont les gain g ou Bg permet de réduire le courant d'alimentation du moteur et par voie de conséquence les pertes par effet joule de celui-ci.

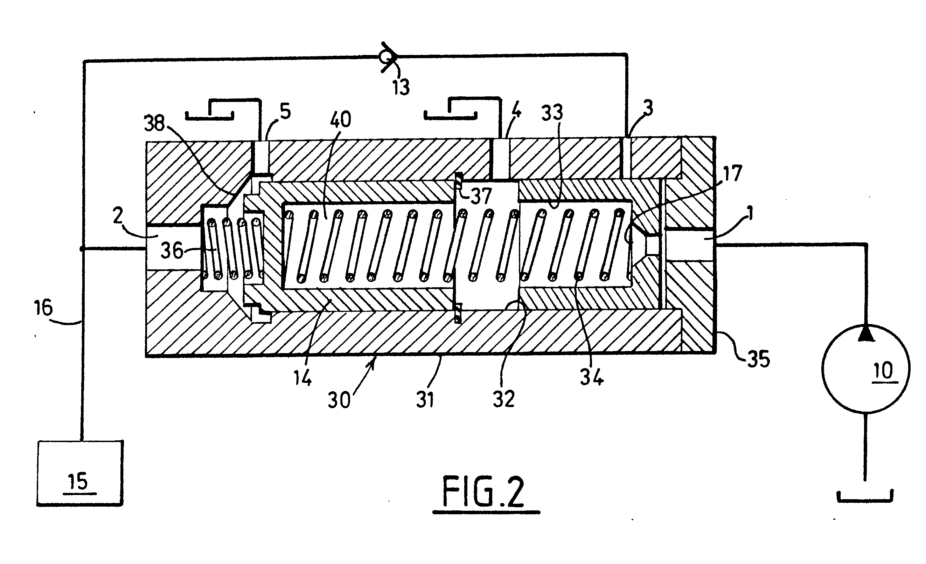

En se référant plus particulièrement à la figure 2, la pompe 10 alimente l'orifice d'entrée 1 d'un bloc hydraulique 30 dont l'orifice de sortie principal 2 est raccordé au récepteur 15 par le conduit 16. Le clapet anti-retour 13 est branché entre l'orifice 2 et un orifice de sortie auxiliaire 3. Le bloc 30 est également raccordé au réservoir par des orifices 4, 5 de fuite.

Le bloc hydraulique est constitué par un corps 31 muni d'un alésage 32 dans lequel coulissent le clapet 14 et un tiroir différentiel 33 muni d'un orifice calibré 17 limiteur du débit.

Le tiroir s'étend entre les orifices 3 et 4 de sorte que l'orifice 3 peut être obturé tandis que l'orifice 4 est ouvert. Par contre, l'orsque l'orifice 3 est ouvert, l'orifice 4 lamine la fuite du débit de fluide.

Un premier ressort 34 est monté en compression entre le clapet 14 et le tiroir 33 et plaque ce dernier sur un bouchon de fermeture 35 du corps 31. La chambre 40 délimitée entre le clapet 14 et le tiroir 33 contient le ressort 34.

Un deuxième ressort 36 dont la force de poussée est supérieure à celle du ressort 34 repousse le clapet 14 dans le sens de son ouverture contre une butée 37. Dans cette position, l'orifice de sortie 2 est mis en communication avec le réservoir au travers de l'orifice 5.

L'étanchéité du clapet 14 est établie au contact d'une surface conique 38 dont le diamètre est inférieur à celui de l'alésage 32.
Soit S1, la section de l'alésage 32
S2, la section d'étanchéité du clapet 14
et S2/S1 = $\alpha$ tel que B = 1/$\alpha$ où $\alpha$ > 1

Le fonctionnement du circuit sera maintenant décrit en référence à la figure 2 sur laquelle le récepteur 15 est représenté hors pression et relié au réservoir par suite de l'ouverture du clapet 14.

Lorsque la pompe 10 débite dans l'orifice 1, le débit est limité par l'orifice 17.

Par suite de la fuite au travers de l'orifice 4, le tiroir 33 avance sous l'effet de la perte de charge au travers de l'orifice 17 en comprimant le ressort 34. Lorsque le taux de compression du ressort 34 est suffisant, le clapet 14 se ferme.

Par construction, la disposition des orifices de fuite est telle que l'orifice auxiliaire 3 demeure fermé lorsque le clapet 14 se ferme.

Le moyen limiteur de débit constitué par le tiroir 33, l'orifice 17 et le ressort 34 permet la stabilisation du tiroir dans une position dans laquelle l'orifice 3 est ouvert.

Le récepteur 15 est alimenté par l'orifice 3 et par le clapet 13 tant que la pompe débite.

L'orifice de sortie 2 est alors sous pression et le clapet différentiel 14 demeure fermé sous l'effet de la force du ressort 34 et de la pression dans la chambre 40 malgré les fuites possibles par l'orifice 4.

Lorsque l'on désire réduire la pression dans le récepteur 15, on diminue par convention le débit de la pompe 10. Lorsque le débit de la pompe devient inférieur au débit d'alimentation de la chambre 40, le tiroir 33 recule vers sa position initiale et ferme l'orifice 3.

La pression dans l'orifice 2 soulève le clapet 14 et met en communication ledit orifice avec l'orifice 5 et le réservoir dans le but de décomprimer le récepteur.

Il est à remarquer que dans le cas d'une réduction partielle de la pression du récepteur, le clapet 14 s'ouvre partiellement sans modification de position du tiroir 33.

**Revendications**

1) Circuit de commande, de régulation et de contrôle d'un débit de fluide comportant :

- un distributeur (12) associé à un récepteur (15) actionné par un fluide sous pression,
- un conduit (16) d'alimentation en fluide sous pression sur lequel est branché le récepteur (15),
- une électro-pompe (11, 10) sur laquelle est branché le distributeur (12),
- un dispositif (19) actionné par un capteur (18) de mesure,connecté au conduit d'alimentation du récepteur (15) agencé de façon à contrôler le moteur électrique (11) en comparaison avec la valeur de consigne d'un moyen d'actionnement (20) du récepteur,
caractérisé par le fait en ce qu'il est prévu un clapet (14) différentiel à ressort et moyen limiteur de chute de pression piloté par la pression de fluide, ce clapet limiteur agissant de manière à réduire la pression d'alimentation du récepteur par suite d'une réduction du débit de la pompe.

2) Circuit de commande selon la revendication 1, caractérisé par le fait que le moyen limiteur est formé dans un bloc hydraulique (30) coaxialement avec le clapet différentiel (14), ce dernier étant repoussé vers son siège par un ressort (34) monté en compression entre ledit clapet (14) et un tiroir (33) coulissant muni de l'orifice (17) limiteur du débit de la pompe (10).

3) Circuit de commande selon la revendication 2, caractérisé par le fait que le tiroir coulissant (33) obture une voie d'alimentation du récepteur (15) et se prolonge axialement vers un orifice de fuite (4) à étranglement afin d'assurer la fermeture du clapet (14).

4) Circuit de commande selon la revendication 3, caractérisé par le fait que le bloc hydraulique (30) est branché en parallèle avec un clapet anti-retour (13) sur une voie d'alimentation du récepteur (15).

5) Circuit de commande selon la revendication 4, caractérisé par le fait que le bloc hydraulique possède une voie de décompression du récepteur (15) dans laquelle le clapet différentiel (14) à ouverture commandée au cours d'une réduction du débit de la pompe, commande la mise au réservoir dudit récepteur.

EP 0 348 270 A1

## FIG.1

FIG.2

EP 0 348 270 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0085285 (INSTITUT CERAC S.A.) <br> * page 4, ligne 18 - page 5, ligne 3; figure 1 * | 1 | G05D16/20 <br> F16D25/14 <br> B60T13/16 |
| A | GB-A-2071783 (ALFRED TEVES GMBH) <br> * abrégé; figure 1 * | 1 | |
| A | EP-A-0122384 (ROBERT BOSCH GMBH) <br> * page 5, ligne 12 - ligne 31; figure 1 * | 1 | |
| A | US-A-4657042 (T. LEWIS) <br> * colonne 2, ligne 45 - colonne 4, ligne 13; figure 1 * | 1 | |

**DOMAINES TECHNIQUES RECHERCHES (Int. Cl.4)**

F16D
B60T
G05D

Le présent rapport a été établi pour toutes les revendications

| Lieu de la recherche | Date d'achèvement de la recherche | Examinateur |
|---|---|---|
| LA HAYE | 02 AOUT 1989 | HELOT H.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant